# FASCICULE DE BREVET EUROPEEN

(11) **EP 3 740 850 B1**
(45) Date de publication et mention de la délivrance du brevet: **29.03.2023**
(21) Numéro de dépôt: 19707043.6
(22) Date de dépôt: 16.01.2019
(51) Int. Cl.: G06F 3/02, H01H 13/83

(54) **PERIPHERIQUE AVEC AU MOINS UNE TOUCHE TRANSPARENTE COMPRENANT UNE MEMBRANE FLEXIBLE**
PERIPHERIEGERÄT MIT MINDESTENS EINER TRANSPARENTEN TASTE MIT EINER FLEXIBLEN MEMBRAN
PERIPHERAL HAVING AT LEAST ONE TRANSPARENT KEY COMPRISING A FLEXIBLE MEMBRANE

(30) Priorité: 16.01.2018 FR 1850360
(43) Date de publication de la demande: 25.11.2020
(73) Titulaire: Groupe LDLC, 69578 Limonest Cedex (FR)
(72) Inventeur: FAIVRE, Laurent, 69130 Ecully (FR); PUGGIONI, Yuria, 69460 Villefranche (FR)
(74) Mandataire: Cabinet Beau de Loménie
(86) Numéro de dépôt international: PCT/FR2019/050092
(87) Numéro de publication internationale: WO 2019/141944

(56) Documents cités:
- US-A1- 2006 060 463
- US-A1- 2012 160 653
- US-A1- 2013 082 932
- US-B2- 9 818 557

## Description

La présente invention concerne des périphériques comportant au moins une touche transparente, actionnable sous l'effet d'une pression, munie d'un système permettant une force d'actionnement et un effet de retour de pression à la suite d'une pression exercée sur la touche.

Classiquement, les périphériques comportant des touches transparentes comprennent un boitier pourvu sur sa façade, d'ouvertures dans lesquelles sont engagées les touches, et au moins un écran sur lequel sont affichés les symboles ou les images à visualiser à travers les touches transparentes. Ces périphériques comprennent également un système permettant la détection d'une pression exercée sur une touche. Ces périphériques comprennent aussi un système haptique permettant à l'utilisateur de sentir lorsque la touche est effectivement appuyée (force d'actionnement), ainsi qu'un système pour un effet de retour de pression à la suite d'une pression exercée sur la touche.

Différents systèmes de contrôle, i.e. des systèmes haptiques et pour un effet de retour de pression, sont connus. Par exemple, la demande WO 2016/142881 décrit un dispositif pour ordinateur, tel qu'un clavier d'ordinateur, comportant un boîtier pourvu sur sa façade, d'ouvertures dans lesquelles sont engagées des touches au moins en partie transparentes, à travers desquelles des symboles affichés sur un écran peuvent être visualisés. Le dispositif comporte également un système de détection d'une pression exercée sur la touche et un système assurant une force d'actionnement, sous forme d'un dôme qui est écrasé lorsqu'une pression est exercée sur la touche, et un système à effet de retour de pression, sous forme de ciseaux, de charnière ou de ressort.

Un premier inconvénient associé avec un système à effet de retour de pression mécanique est la détérioration dans le temps de ce système. En effet, ces systèmes à effet de retour de pression s'usent dans le temps.

Un second inconvénient associé avec un système à effet de retour de pression mécanique est l'effet haptique qui n'est pas suffisamment agréable, et qui s'altère dans le temps.

De plus, dans le document WO 2016/142881, le mécanisme de la touche coopère avec cette dernière sur une surface importante et est visible à travers la touche transparente. Il s'ensuit un risque d'une mauvaise visualisation de l'écran à travers la touche transparente.

Un autre problème concerne la course de déplacement de la touche résultant d'une pression exercée sur celle-ci, qui doit être stable et équilibrée. Selon un mode de réalisation particulier, le document WO 2016/142881 décrit des ergots situés sur la périphérie de la touche, aptes à coopérer dans des logements complémentaires situés sur la face interne du boîtier, de manière à permettre une mise en position de la touche lorsqu'aucune pression n'est exercée sur celle-ci. De plus, la stabilité de la touche lors de sa course de déplacement n'est pas assurée.

Un autre exemple de système haptique et de retour de pression est décrit dans la demande US 2013/0082932. Cette demande décrit un clavier à affichage dynamique comprenant une pluralité de touches au moins en partie transparentes, un tapis, un élément optique pour chaque touche et au moins un écran. Le tapis est flexible et peut comprendre une pluralité d'éléments en saillie, tels que des dômes de profil trapézoïdal, capable d'assurer une force d'actionnement et un effet de retour de pression pour la touche située au-dessus, en subissant une déformation. Le tapis comprend en outre des éléments de fixation pouvant être fixé aux touches, et permettant de détecter une pression exercée sur une touche lorsqu'ils viennent au contact d'un écran capacitif. Le tapis comporte des orifices pour permettre à la lumière de passer depuis l'écran situé en dessous jusqu'à la partie transparente de la touche située au-dessus.

Un inconvénient associé à ce système est un maintien insuffisant de la touche lors de sa course de déplacement suite à l'application d'une pression. En effet, un tel montage flottant provoque une incertitude sur la position de la touche.

Un autre exemple est illustré dans la demande US 2012/0160653, qui décrit un clavier comportant des touches réalisées en un matériau transparent ou transmettant la lumière. Le clavier comporte également une couche située en dessous des touches et sur laquelle est imprimé un motif qui comporte des sections opaques et des sections transmettant la lumière. Ainsi, grâce à la présence d'une source lumineuse, le motif de la couche est visible au travers de la touche au-dessous de laquelle il est situé. La touche est également disposée au-dessus d'une pièce élastique située au-dessus d'un commutateur. Lorsqu'une pression est exercée sur la touche, la pièce élastique se déforme, permettant l'actionnement du commutateur.

Un inconvénient associé à ce système est le maintien en position de la touche ainsi que son guidage lorsqu'une pression est exercée sur celle-ci. En effet, il est indispensable de bien maintenir en position la touche et la guider lors de sa course de déplacement pour éviter toute incertitude dans son positionnement et une bonne translation par rapport au boitier lorsqu'une pression est exercée.

Un autre exemple est illustré dans le brevet US 9,818,557 B2 qui décrit un clavier à affichage dynamique comportant un boitier, une pluralité de touches disposées sur un élément élastique de support monté au-dessus d'un système de détection et d'un écran comportant une première portion visible à travers les touches, et une seconde portion sur laquelle peut être affiché un message. L'élément élastique est configuré pour être en contact avec le bord latéral des touches. Cet élément élastique comporte par ailleurs au moins une protubérance formée sur le côté en direction opposée à la touche. Lorsque qu'une pression est exercée sur la touche, une protubérance 4 peut alors toucher une zone du module de détection pour que l'action soit transmise et affichée sur la seconde portion de l'écran. Là encore, un inconvénient associé à ce système est le maintien en position de la touche ainsi que son guidage lorsqu'une pression est exercée sur celle-ci.

La présente invention vise à remédier aux inconvénients de l'art antérieur. Pour cela, un premier objet de l'invention est de proposer un périphérique comprenant un système à effet de retour de pression assurant de bonnes propriétés haptiques et s'usant peu dans le temps, et en particulier moins qu'un système à effet de retour de pression mécanique. Avantageusement, le système de retour de pression permet une bonne visualisation de l'écran à travers la touche transparente.

Un objet de l'invention est de proposer un périphérique comprenant une touche dont le positionnement est précis, tout en étant guidée lors de son déplacement. Un périphérique comprenant un bouton pourvu de deux structures de guidage est notamment décrit dans le document US 2006/0060463. Chaque structure de guidage comprend un élément plat et un élément en L, espacés de sorte à recevoir une protrusion du bouton. Lorsque qu'une pression est exercée sur le bouton, la protrusion glisse entre l'élément plat et l'élément en L.

Un autre objet de l'invention est de proposer un périphérique comprenant une touche dont le guidage est assuré sur toute sa course de déplacement résultant d'une pression exercée sur celle-ci. Plus précisément, la course de déplacement de la touche est stable et équilibrée.

Pour cela, le périphérique selon l'invention est tel que décrit à la revendication 1. D'autres modes de réalisation sont définis dans les revendications dépendantes.

Dans le cadre de l'invention, on entend par « force d'actionnement » la force nécessaire pour que soit détectée une pression appliquée sur une touche.

Un autre objet de l'invention concerne un article comprenant un périphérique selon l'invention. Par exemple, un tel article peut être un ordinateur, une machine-outil, un appareil médical, un appareil hifi, un tableau de bord, un assistant digital personnel, un pupitre de commande ou une télécommande.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'un périphérique conforme à l'invention.
La **Figure 2** est une vue en perspective éclatée d'un empilement des différents éléments constituant un périphérique conforme à l'invention.
La **Figure 3** est une vue en coupe d'une partie d'un périphérique conforme à l'invention,
La **Figure 4** est une vue en perspective d'une membrane flexible conforme à l'invention, sur laquelle est placée une touche transparente.
La **Figure 5** est une vue en perspective d'une face interne d'un boitier comportant des ouvertures, avec une touche montée dans une des ouvertures du boîtier.
Les **Figures 6A** à **6C** sont des vues en perspective représentant le montage d'une touche transparente en relation avec ses éléments de guidage.

Le périphérique selon l'invention peut être un clavier de commande électronique, tel qu'un périphérique informatique, un périphérique hi-fi, un périphérique d'une machine-outil, un périphérique d'un tableau de bord, un assistant digital personnel ou d'un pupitre de commande. Selon un mode de réalisation particulier, le périphérique selon l'invention est un périphérique informatique, tel qu'un clavier d'ordinateur ou une souris.

Tel que cela ressort des figures, l'objet de l'invention concerne un périphérique **1** comportant au moins une touche **2** transparente à travers laquelle est visualisé un symbole **3** affiché sur un écran **4** via un chemin d'affichage **5.** Pour le cas où le périphérique comporte plusieurs touches **2** transparentes, le périphérique **1** comporte un chemin d'affichage par touche **2.** Avantageusement, le périphérique **1** ne comporte pas de touche opaque.

Par « chemin d'affichage », on entend le chemin qui permet la visualisation des symboles ou images affichés sur l'écran **4** à travers les différents éléments constitutifs du périphérique, dont la touche **2** transparente.

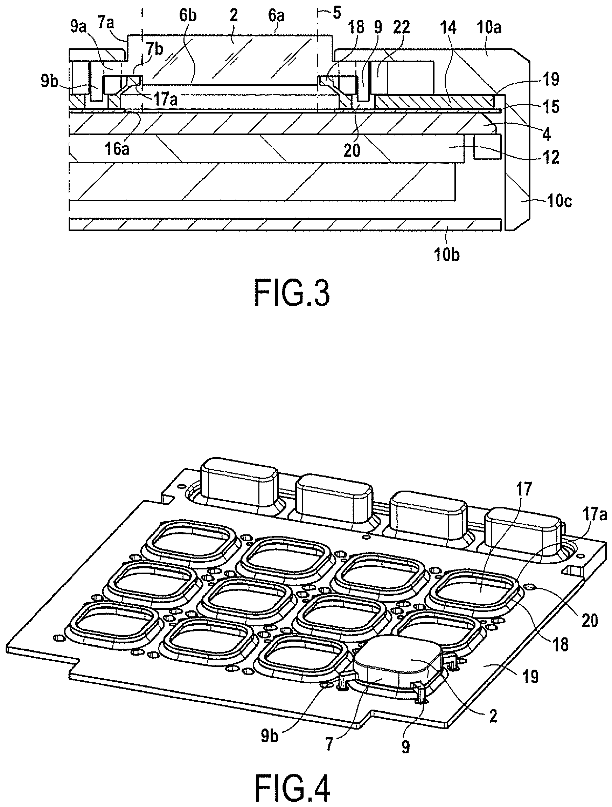

Dans le cadre de l'invention, une touche peut être un bloc de section de toute forme, et par exemple une section circulaire ou trapézoïdale, en particulier un bloc dont la section est un parallélogramme, un rectangle ou un carré. Chaque touche **2** comporte une surface supérieure **6a** sur laquelle peut être exercée une pression et une surface inférieure **6b** s'étendant sensiblement en vis-à-vis de la surface supérieure **6a,** reliées entre elles par une plage périphérique **7.** Selon un mode de réalisation de l'invention, chaque touche **2** comporte une plage périphérique latérale **7a** s'étendant à partir de la surface supérieure **6a** et se prolongeant par une plage périphérique inférieure **7b** dont la section est respectivement sensiblement parallèle aux surfaces supérieure **6a** et inférieure **6b,** tel que représenté sur la **Fig. 3****.** Selon un mode de réalisation particulier, chaque touche **2** comporte une gorge **8** aménagée sur tout le pourtour de la plage périphérique **7** et délimitant la plage périphérique inférieure **7b.**

Selon une caractéristique avantageuse de réalisation de l'invention, chaque touche **2** comporte au moins une patte **9** qui, dans l'exemple illustré, est réalisée de manière monobloc avec la touche. Bien entendu, la patte **9** peut être rapportée en étant assemblée à la touche **2** par tout moyen approprié. Chaque patte **9** s'étend en saillie de ladite touche **2,** à partir de sa plage périphérique **7.** En d'autres termes, chaque patte **9** est aménagée pour être débordante par rapport à la surface supérieure **6a** de la touche **2.** Lorsque la touche est sous forme d'un bloc de section trapézoïdale, une patte **9** peut s'étendre en saillie à partir de la plage périphérique **7,** au niveau d'un angle ou d'un côté de la surface supérieure **6a** de la touche **2.**

Selon un exemple préféré de réalisation, l'écran **4** permet un affichage dynamique des symboles **3.** En d'autres termes, les symboles **3** affichés pour chaque touche **2** peuvent être modifiés suite à une consigne donnée par l'utilisateur ou par une application. L'écran **4** peut être un écran LCD (liquid cristal display), TFT-LCD (thin film transistor liquid crystal display), LED (light emitting diode), OLED (organic light emitting diode), AMOLED (active matrice OLED), IPS (in-plane switching), VA (vertical alignment), TN (twisted nematic), un écran cathodique, un écran plasma ou un écran électrophorétique. L'écran **4** est de préférence un écran bistable, et en particulier un écran électrophorétique.

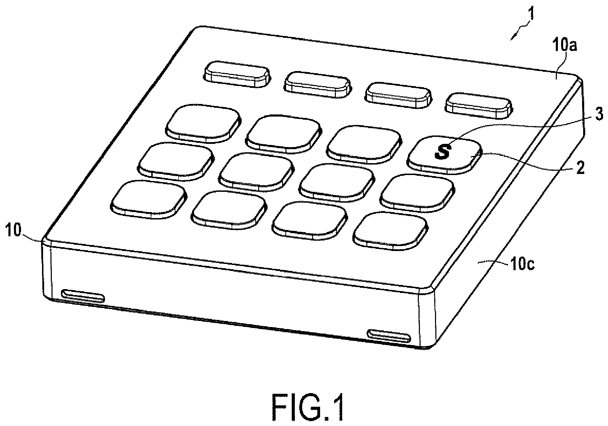

Le périphérique **1** comprend un boîtier **10** composé d'une première face **10a** munie d'une ouverture **11** pour chaque touche **2** et d'une deuxième face **10b** en vis-à-vis. Ainsi, chaque touche **2** s'élève de part et d'autre de la première face **10a** du boîtier **10** qu'elle traverse via une ouverture **11** lorsqu'aucune pression n'est exercée sur la touche **2,** tel que cela est représenté aux **Fig. 1** et **3****.** Dans le cadre de l'invention, la première face **10a** du boitier **10** correspond à la paroi supérieure du boitier **10** pourvue d'une ouverture **11** pour chaque touche **2,** et la deuxième face **10b** du boîtier **10** correspond à la paroi inférieure du boitier **10.**

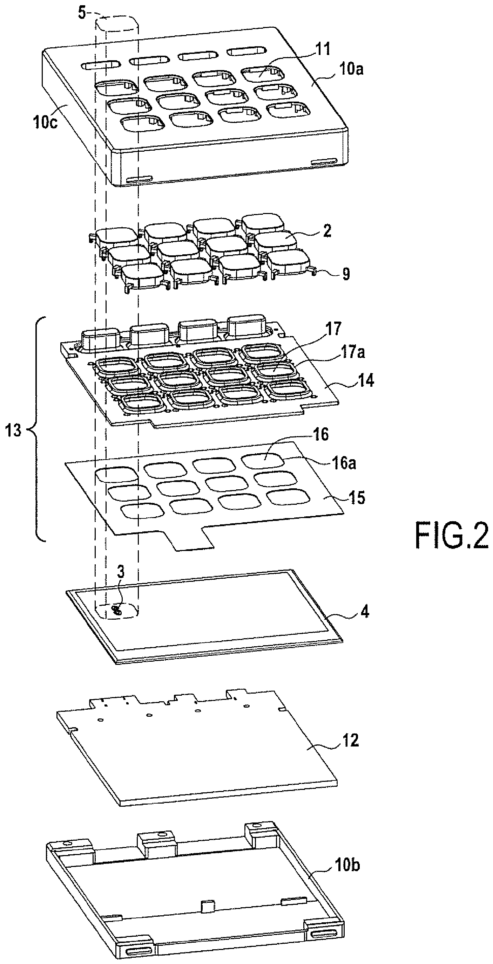

Selon le mode de réalisation représenté à la **Fig. 2****,** le périphérique **1** comprend également un circuit électronique **12** assurant les fonctionnalités du périphérique **1,** et notamment la transmission du signal d'actionnement.

Le périphérique **1** comprend également un système de contrôle et de détection **13** d'une pression exercée sur la touche **2.** Le système de contrôle et de détection **13** non seulement confère les propriétés haptiques à la touche, et en particulier une force d'actionnement et un effet de retour de pression suite à une pression exercée sur la touche **2,** mais permet également de détecter une pression exercée sur cette touche.

Conformément à l'invention, le système de contrôle et de détection **13** comporte une membrane flexible **14** assurant une force d'actionnement et un effet de retour de pression suite à une pression exercée sur une touche **2.** La membrane flexible **14** contribue au maintien en position la touche **2,** lorsqu'aucune pression n'est exercée sur ladite touche **2** et lors de sa course de déplacement résultant d'une pression exercée.

Selon un premier mode de réalisation représenté aux **Fig. 2** et **3****,** le système de contrôle et de détection **13** comporte une membrane flexible **14,** et un dispositif de détection **15** d'une pression exercée sur la touche **2** distinct de la membrane flexible **14.** Comme cela ressort à la **Fig. 3****,** le dispositif de détection **15** présente avantageusement une surface d'appui pour la membrane flexible **14.**

Selon un autre mode de réalisation non représenté dans les figures, le système de contrôle et de détection **13** peut être une membrane flexible telle que décrite dans le cadre de l'invention et intégrant en outre une structure de commutation permettant de délivrer un signal d'actionnement lorsqu'une pression est exercée sur une touche **2.** Une telle membrane flexible avec structure de commutation intégrée permet alors de conférer les propriétés haptiques recherchées grâce à la nature flexible et à la géométrie de la membrane, ainsi que de détecter une pression exercée sur la touche grâce à la structure de commutation intégrée.

Selon le mode de réalisation illustré aux **Fig. 2** et **3****,** le périphérique selon l'invention comporte un circuit électronique **12,** un écran **4,** un dispositif de détection **15,** une membrane flexible **14,** au moins une touche **2** et un boîtier **10.** Plus précisément, le périphérique **1** peut comporter le boîtier **10** composé d'une première face **10a** munie d'ouvertures **11** à travers desquelles des touches **2** peuvent passer, et d'une deuxième face **10b** apte à venir en appui sur des bords tombés **10c** de la première face. Les autres éléments constitutifs du périphérique **1** sont placés à l'intérieur du boitier **10** qui est ensuite verrouillé en position fermée par tous moyens appropriés.

Tel que cela est illustré aux **Fig. 1** à **3****,** les touches **2** sont engagées à travers les ouvertures **11** de la première face **10a** du boîtier **10,** de sorte à déborder de la première face **10a** du boitier **10.** Selon ce mode de réalisation, la membrane flexible **14** est placée en dessous des touches **2.** La membrane flexible **14** est placée au-dessus du dispositif de détection **15** qui présente alors une surface d'appui pour la membrane flexible **14.** Le dispositif de détection **15** est lui-même placé au-dessus de l'écran **4** sur lequel sont affichés les symboles **3** pour chaque touche **2.** Enfin, le circuit électronique **12** peut être placé en dessous de l'écran **4,** et au-dessus de la deuxième face **10b** du boîtier **10.** En d'autres termes, les touches **2** peuvent être positionnées entre la première face **10a** du boîtier **10** (à travers les ouvertures **11**) et la membrane flexible **14,** le dispositif de détection **15** étant situé entre la membrane flexible **14** et l'écran **4** qui lui-même est au contact du circuit électronique **12.** Cet arrangement n'est pas déterminant, et un autre empilement peut être réalisé dans le cadre de l'invention. Par exemple, l'écran **4** pourrait être placé entre la membrane flexible **14** et le dispositif de détection **15.**

Lorsque le dispositif de détection **15** est positionné entre l'écran **4** et la touche transparente **2,** comme cela est illustré aux **Fig. 2** et **3****,** celui-ci comporte un passage **16** par chemin d'affichage **5.** Ce passage **16** est de dimension similaire, et a une surface au moins aussi grande que l'ouverture **11** dans laquelle est logée la touche **2** adjacente. Le passage **16** du dispositif de détection **15** et l'ouverture **11** de la première face **10a** du boitier **10** sont placés en position de superposition ou de coïncidence. Ainsi, le dispositif de détection **15** n'est pas visible à travers la touche **2** transparente, et la bordure **16a** d'un passage **16** délimite le chemin d'affichage **5.**

Le dispositif de détection **15** peut comporter une structure tactile ou, de préférence, une structure de commutation sur laquelle agit au moins une patte **9** solidaire d'une touche **2,** de manière à délivrer un signal d'actionnement lorsqu'une pression est exercée sur la touche **2,** et par exemple de manière à générer un signal électrique. Par exemple, la structure de commutation peut être composée de deux feuilles isolantes recouvertes sur leur face interne d'une surface conductrice, et séparées par une feuille isolante comportant des ouvertures. L'application d'une pression sur la structure de commutation, à l'endroit d'une ouverture de la feuille isolante, permet la mise en contact des deux surfaces conductrices. De telles structures de commutation pouvant convenir dans le cadre de l'invention sont connues de l'homme du métier, et ne seront pas détaillées ici.

Chaque patte **9** est positionnée au droit d'une ouverture de la feuille isolante et possède une hauteur adaptée pour agir sur le dispositif de détection **15.** Dans l'exemple illustré, chaque patte **9** présente une branche de liaison **9a** s'étendant sensiblement parallèlement à la surface supérieure **6a** de la touche **2** et se prolongeant à l'équerre, par une branche d'actionnement **9b** s'étendant verticalement. Lorsqu'une pression est exercée sur une touche **2,** la patte **9,** par sa branche d'actionnement **9b,** peut venir au contact du dispositif de détection **15** qui délivre alors un signal d'actionnement.

Selon le mode de réalisation illustré, l'extrémité libre de la branche d'actionnement **9b** comporte un téton, en particulier de section circulaire. Un tel téton permet de concentrer les contraintes sur une plus petite surface, et en particulier de faciliter la détection d'une pression exercée sur la touche **2.**

Bien que non illustré, l'extrémité libre de la branche d'actionnement peut être dépourvue de tout téton.

La membrane flexible **14** comporte au moins un orifice **17** en relation de chaque touche **2,** de dimension sensiblement similaire et de surface sensiblement inférieure à celle de l'ouverture **11** dans laquelle est insérée la touche **2.** L'orifice **17** et l'ouverture **11** sont de préférence superposés, l'orifice **17** étant en dessous de l'ouverture **11.** L'orifice **17** et l'ouverture **11** sont concentriques, la touche **2** étant positionnée entre l'orifice **17** et l'ouverture **11.** Chaque orifice **17** comporte une bordure **17a** qui délimite le chemin d'affichage **5** pour chaque touche **2.** Ainsi, dans le mode de réalisation représenté aux **Fig. 2** et **3****,** le chemin d'affichage **5** pour une touche **2** transparente est délimité par la surface supérieure **6a** de la touche **2,** l'ouverture **11** de la première face **10a** du boîtier **10,** la bordure **17a** de l'orifice **17** de la membrane flexible **14** coopérant avec la touche **2,** et la bordure **16a** du passage **16** du dispositif de détection **15** situé en dessous. En d'autres termes, la surface supérieure **6a** de chaque touche **2** est superposée avec l'orifice **17** de la membrane flexible **14** et avec le passage **16** du dispositif de détection **15.**

Chaque orifice **17** de la membrane flexible **14** est délimité par une bordure **17a** qui coopère avec une touche **2.** Plus précisément, cette bordure **17a** peut coopérer avec la plage périphérique **7** de la touche **2,** et notamment avec la plage périphérique inférieure **7b** tel que cela ressort à la **Fig. 3****.** Selon un mode de réalisation particulier, la bordure **17a** de l'orifice **17** de la membrane flexible **14** coopère avec le fond d'une gorge **8** aménagée sur le pourtour de la touche **2,** ce qui contribue au maintien en position de la touche et à son guidage lors de son déplacement. Selon un mode de réalisation préféré, chaque touche **2** est en appui, par sa plage périphérique inférieure **7b,** sur la bordure **17a** d'un orifice **17** de la membrane flexible **14.** Ainsi, dans le cadre de l'invention, la surface de contact entre la membrane flexible **14** et la touche **2** est faible, car celui-ci a lieu sur tout le périmètre de la touche **2,** et contribue au maintien en position de la touche sur toute sa course de déplacement et son guidage.

Selon le mode de réalisation représenté aux **Fig. 2 à 4****,** la membrane flexible **14** comporte pour chaque orifice **17,** une jupe **18** s'élevant à partir d'une embase **19.** Chaque jupe **18** délimite alors à son extrémité libre la bordure **17a** de l'orifice **17** de la membrane flexible **14,** et donc le chemin d'affichage **5.** En d'autres termes, la membrane flexible **14** peut être de forme plane et munie d'un orifice **17** pour chaque touche **2** avec laquelle elle est en contact, les bordures **17a** des orifices **17** étant constituées par l'extrémité de la jupe **18** apte à coopérer avec la touche **2,** et en particulier avec sa gorge **8.**

La jupe **18** est de préférence de forme tronconique en s'élevant en direction d'une touche superposée, avec dans l'exemple de réalisation illustré sur les dessins, la grande base située au niveau de l'embase **19** et la petite base formant la bordure **17a** de l'orifice **17.** Selon ce mode de réalisation, cette jupe **18** permet d'assurer la force d'actionnement et l'effet de retour de pression recherchés, et permet également un bon positionnement de la touche **2** par rapport à l'ouverture **11** du boîtier **10.** La géométrie de la jupe **18** n'est en soi pas limitante, et peut être adaptée par l'homme du métier en fonction des caractéristiques techniques souhaitées.

Alternativement, selon un autre mode de réalisation, la touche **2** est liée par collage à la membrane flexible **14** par sa plage périphérique **7.**

Sous l'action d'une pression exercée sur une touche **2** avec laquelle elle coopère, la membrane flexible **14** se déforme au-delà d'une certaine force appliquée (force d'actionnement). Selon les caractéristiques de la membrane, et notamment sa géométrie et sa dureté, la force d'actionnement et l'effet de retour de pression peuvent être ajustés. Ceci relève du travail de routine pour l'homme du métier, et ne sera pas détaillé ici.

La membrane flexible **14** peut être opaque, translucide, voire transparente. Selon un mode de réalisation particulier, la membrane est opaque. Selon un autre mode de réalisation particulier, la membrane est translucide, et de préférence transparente.

Ainsi, la présence de cette membrane flexible **14** est peu ou pas visible à travers la touche **2** transparente, en raison de la petite surface de contact entre la touche **2** et la membrane flexible **14.** De plus, si la membrane flexible **14** est translucide ou transparente, celle-ci est peu ou pas visible également en raison de sa nature translucide ou transparente.

La membrane flexible **14** peut être en tout matériau polymérique, tel que le silicone, le caoutchouc comme le caoutchouc EPDM (éthylène-propylène-diène monomère), ou les élastomères de polyuréthane ; ou en latex. Selon un mode de réalisation préféré, la membrane flexible **14** est en silicone.

La dureté de la membrane flexible **14** et sa géométrie permettent d'ajuster la force d'actionnement et la force de retour de pression.

Selon le mode de réalisation représenté à la **Fig. 4****,** la membrane flexible **14** comporte en outre un trou de passage **20** pour chaque patte **9** d'une touche **2,** et en particulier pour la branche d'actionnement **9b.** Ainsi, ce trou de passage **20** permet à une patte **9** solidaire d'une touche **2** de passer au travers de la membrane flexible **14,** et ainsi d'être directement en contact avec le dispositif de détection **15** qui délivre le signal d'actionnement lorsqu'une pression est exercée sur ladite touche. La présence de trous de passage **20** permet la détection d'une pression exercée sur la touche **2.**

Selon un mode de réalisation de l'invention, le périphérique **1** comporte en outre au moins une structure de guidage **21** d'une touche **2.** Une telle structure de guidage **21** permet d'avoir une course de déplacement stable et équilibrée lors d'une pression exercée sur la touche **2.**

Dans le cadre de l'invention, la touche **2** est guidée en translation par rapport au boîtier **10** par sa coopération avec la première face **10a** du boîtier **10.** Ainsi, lorsqu'une pression est exercée sur la touche, cette structure de guidage permet un déplacement perpendiculaire de la touche par rapport au boitier. Dans l'exemple illustré sur les figures, la structure de guidage **21** est composée d'une patte **9** solidaire d'une touche **2** et de deux guides **22** s'élevant à partir de la surface interne de la première face **10a** du boîtier **10.** Selon ce mode de réalisation, la patte **9** permet à la fois la détection d'une pression exercée sur la touche **2,** mais également le guidage de la touche **2** dans son mouvement.

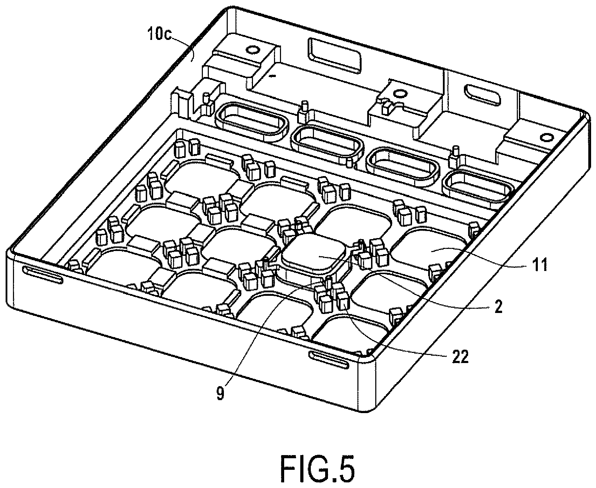

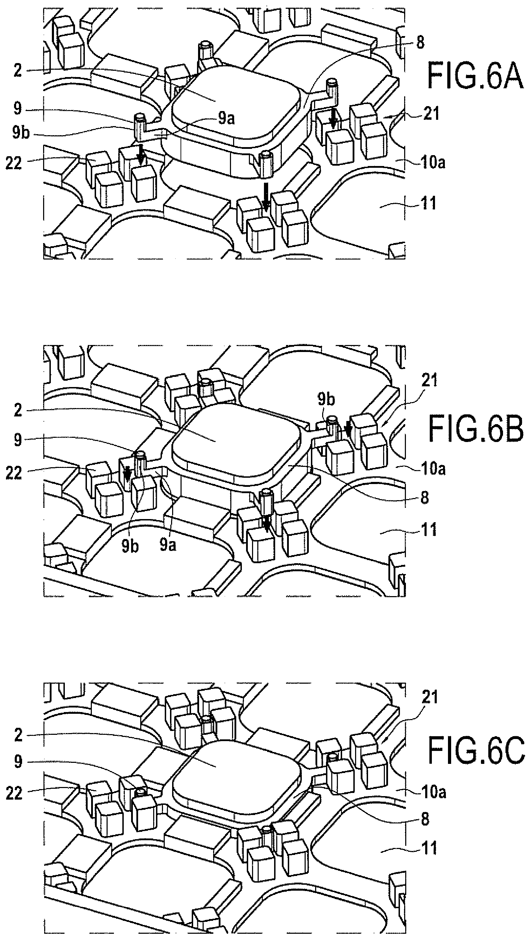

Les deux guides **22** délimitent entre eux une glissière pour la patte **9** complémentaire, comme représenté aux **Fig. 5** et **6A****-6C.** Ainsi, la patte **9,** et en particulier la branche d'actionnement **9b,** coulisse dans la glissière délimitée par les deux guides **22.**

La hauteur des guides **22** doit être suffisamment grande pour permettre le guidage de la patte **9** sur toute la course de déplacement suite à une pression exercée sur celle-ci. En effet, une hauteur moindre ne permet pas un bon guidage de la touche **2** sur toute sa course. De préférence, la plus grande dimension D de la section du guide **22** et la longueur L du guide **22** sont tels que L>2,5 D. Dans le cas où le guide **22** est de section circulaire, la plus grande dimension D correspond au diamètre de la section.

En position montée du périphérique, les guides **22** contribuent à maintenir en position la membrane **14.**

Les guides **22** peuvent être de différentes formes, mais sont avantageusement des éléments distincts se présentant sous forme d'ergots, plots ou colonnettes. Deux guides **22** délimitant une même glissière sont avantageusement de forme et de taille sensiblement identiques. Les guides **22,** qui s'étendent en saillie à partir de la surface interne de la première face **10a** du boîtier **10,** sont des éléments rapportés ou de préférence font partie intégrante du boitier **10.**

Avantageusement, la largeur de la glissière délimitée par deux guides **22** est de dimension sensiblement égale, au jeu de fonctionnement près, à la largeur de la branche d'actionnement **9b,** ce qui permet d'éviter l'arc-boutement de la branche d'actionnement **9b.** De préférence, la glissière délimitée par les guides **22** est ajustée à la branche d'actionnement **9b** de sorte à éviter l'arc-boutement de la branche d'actionnement **9b** et à permettre son glissement dans la glissière.

Avantageusement, les guides **22** sont en un matériau plastique auto-lubrifié ou quasi auto-lubrifié, ou en matériau plastique recouvert de vernis. De tels matériaux plastiques et vernis pouvant convenir dans le cadre de l'invention sont bien connus de l'homme du métier et ne seront pas détaillés ici. Selon ce mode de réalisation, le coefficient de frottement généré par le coulissement de la branche d'actionnement **9b** dans la glissière est minimisé.

Dans le cadre de l'invention, on entend par « coefficient de frottement » la force résultant du frottement de la branche d'actionnement **9b** en mouvement par rapport aux guides **22.**

Le périphérique **1** peut comprendre au moins une structure de guidage **21** par touche **2,** de préférence au moins trois, et en particulier quatre. Bien entendu, la structure de guidage peut être de tout type connu en soi, et différent de ce qui est décrit ci-dessus.

Pour le cas où le périphérique **1** comporte plusieurs structures de guidage **21,** selon le mode de réalisation représenté aux **Fig. 5****,** **6A, 6B** et **6C****,** les guides **22** de deux structures de guidage **21** voisines ne sont pas reliés entre eux. Alternativement, selon un autre mode de réalisation non illustré, les guides **22** de deux structures de guidage **21** voisines sont reliés entre eux.

Selon le mode de réalisation représenté aux **Fig. 5****,** **6A, 6B** et **6C****,** deux faces d'un guide **22** délimitent ensemble une glissière de deux touches voisines. En d'autres termes, un guide **22** peut présenter deux faces à 90° qui délimitent chacune, avec un autre guide **22** voisin, une glissière pour une patte **9** distincte.

Selon un premier mode de réalisation illustré aux **Fig. 5****,** **6A, 6B** et **6C****,** le périphérique comprend quatre structures de guidage **21** par touche. Selon ce mode de réalisation, les quatre structures de guidage **21** sont alignées deux par deux selon deux axes sécants. Avantageusement, les structures de guidage **21** d'une touche **2** alignées selon un même axe sont disposées de part et d'autre de la touche **2.**

Pour le cas d'une touche **2** de section trapézoïdale, et en particulier de section parallélogramme, rectangulaire ou carrée, les quatre structures de guidage **21** sont de préférence alignées deux par deux selon les diagonales des ouvertures **11** de la première face **10a** du boîtier **10.** Dans ce cas, chaque structure de guidage **21** est placée au niveau d'un coin d'une touche **2.** La patte **9** s'étend alors en saillie à partir d'un coin de la touche et les guides **22** sont disposés de part et d'autre de chaque diagonale de l'ouverture **11** de la première face **10a** du boitier **10.**

Alternativement, les quatre structures de guidage **21** d'une touche **2** de section trapézoïdale, et en particulier de section parallélogramme, rectangulaire ou carrée, sont disposées le long d'un côté de la touche **2.** Dans ce cas, les structures de guidage **21** sont alignées deux par deux selon les médiatrices des ouvertures **11** de la première face **10a** du boîtier **10.** Dans ce cas, la patte **9** s'étend en saillie à partir de la plage périphérique **7** de la touche **2** et les guides **22** sont disposés de part et d'autre de la médiatrice des côtés de la touche **2.**

Pour le cas particulier d'une touche de section carrée, comme illustré aux **Fig. 5****,** **6A, 6B** et **6C****,** les quatre structures de guidage **21** sont avantageusement alignées deux par deux selon deux axes perpendiculaires, tels que les médiatrices des côtés ou, de préférence, les diagonales.

Pour le cas d'une touche de section circulaire, les quatre structures de guidage **21** sont avantageusement alignées deux par deux selon deux axes perpendiculaires.

Selon un deuxième mode de réalisation, le périphérique comprend trois structures de guidage **21** par touche. Selon ce mode de réalisation, les trois structures de guidage **21** sont réparties uniformément suivant le cercle ayant le même centre que la touche **2,** selon des axes sécants à 120°.

Selon le mode de réalisation illustré aux **Fig. 5****,** **6A, 6B** et **6C****,** le périphérique comporte quatre structures de guidage par touche **2** de section carrée : les pattes **9** s'étendent en saillie à partir des coins de chaque touche **2** et, lorsqu'une pression est exercée sur la touche **2,** les pattes **9** coulissent dans une glissière délimitée par des ergots **22** s'étendant en saillie à partir de la surface interne de la première face **10a** du boitier **10** comportant les ouvertures **11** pour les touches **2.** Chaque ergot **22** comporte deux faces à 90° délimitant une glissière de deux touches voisines.

La structure de guidage **21** selon l'invention non seulement permet une course de déplacement stable et équilibrée de la touche **2** lorsqu'une pression est exercée sur celle-ci, mais laisse également libre le chemin d'affichage **5.**

L'invention n'est pas limitée aux exemples décrits et représentés car diverses modifications peuvent y être apportées sans sortir de son cadre.

## Revendications

1. Périphérique (**1**) comportant au moins une touche (**2**) transparente et actionnable sous l'effet d'une pression, un boitier (**10**) comprenant une première face (**10a**), un système de contrôle et de détection (**13**) d'une pression exercée sur la touche (**2**), et au moins un écran (**4**) configuré pour permettre un affichage de symboles (**3**) à travers chaque touche (**2**) via respectivement un chemin d'affichage (**5**), la première face (**10a**) du boitier (**10**) étant munie d'une ouverture (**11**) dans laquelle chaque touche est engagée, ladite touche (**2**) étant apte à coopérer avec la première face (**10a**) du boitier (**10**), ledit système de contrôle et de détection (**13**) comportant une membrane flexible (**14**) et un dispositif de détection (**15**) d'une pression exercée sur la touche (**2**) distinct de la membrane flexible (**14**), ladite membrane flexible (**14**) étant apte à assurer une force d'actionnement et un effet de retour de pression et comportant au moins un orifice (**17**), chaque orifice délimitant un chemin d'affichage (**5**) pour une touche (**2**), chaque orifice (**17**) étant délimité par une bordure (**17a**) configuré pour coopérer avec une touche (**2**), le dispositif de détection (**15**) comportant une structure de commutation sur laquelle agit au moins une patte (**9**) solidaire d'une touche (**2**), de manière à délivrer un signal d'actionnement lorsqu'une pression est exercée sur ladite touche (**2**), **caractérisé en ce que** le périphérique (**1**) comprend, pour chaque touche (**2**), au moins une structure de guidage (**21**) de la touche (**2**) composée d'une patte (**9**) solidaire de la touche (**2**) et de deux guides (**22**) s'étendant en saillie à partir de la surface interne de la première face (**10a**) du boitier (**10**), pour délimiter entre eux une glissière pour ladite patte (**9**), selon une hauteur permettant le guidage de ladite patte (**9**) dans la glissière sur toute la course de déplacement résultant d'une pression exercée sur ladite touche (**2**).

2. Périphérique (**1**) selon la revendication 1, **caractérisé en ce qu'**il comporte une série de touches (**2**).

3. Périphérique (**1**) selon la revendication 1 ou 2, **caractérisé en ce que** chaque touche (**2**) comporte une plage périphérique inférieure (**7b**) en appui sur la bordure (**17a**) d'un orifice (**17**) de la membrane flexible (**14**).

4. Périphérique (**1**) selon l'une quelconque des revendications 1 à 3, **caractérisé en ce que** la membrane flexible (**14**) comporte une jupe (**18**) s'étendant à partir d'une embase (**19**) et délimitant à son extrémité libre la bordure (**17a**) de chaque orifice (**17**) de la membrane flexible (**14**).

5. Périphérique (**1**) selon l'une quelconque des revendications 1 à 4, **caractérisé en ce que** la bordure (**17a**) de chaque orifice (**17**) de la membrane flexible (**14**) est configurée pour coopérer avec le fond d'une gorge (**8**) aménagée sur le pourtour de chaque touche (**2**).

6. Périphérique (**1**) selon l'une quelconque des revendications précédentes, **caractérisé en ce que** le dispositif de détection (**15**) présente une surface d'appui pour la membrane flexible (**14**).

7. Périphérique (**1**) selon l'une quelconque des revendications précédentes, **caractérisé en ce que** dispositif de détection (**15**) comporte un passage (**16**) par chemin d'affichage (**5**), ledit chemin d'affichage (**5**) étant délimité par la bordure (**16a**) dudit passage (**16**).

8. Périphérique (**1**) selon l'une quelconque des revendications précédentes, **caractérisé en ce que** la membrane flexible (**14**) comporte un trou de passage (**20**) pour chaque patte (**9**) solidaire d'une touche (**2**).

9. Périphérique (**1**) selon l'une des revendications 1 à 8, **caractérisé en ce qu'**il comporte, pour chaque touche (**2**), quatre structures de guidage (**21**).

10. Périphérique (**1**) selon la revendication 9, **caractérisé en ce que** les structures de guidage (**21**) d'une touche sont alignées deux par deux selon deux axes sécants.

11. Périphérique (**1**) selon la revendication 10, **caractérisé en ce que** les structures de guidage (**21**) d'une touche (**2**) de section carrée sont alignées deux par deux selon deux axes perpendiculaires.

12. Périphérique (**1**) selon l'une quelconque des revendications 1 à 11, **caractérisé en ce que** l'écran (**4**) est un écran bistable, de préférence un écran électrophorétique.

13. Périphérique (**1**) selon l'une quelconque des revendications 1 à 12, **caractérisé en ce que** le périphérique est un clavier de commande électronique.

14. Article comprenant un périphérique (**1**) selon l'une quelconque des revendications 1 à 13.

## Patentansprüche

1. Peripheriegerät (1), das mindestens eine transparente und anhand eines Drucks betätigbare Taste (2) aufweist, ein Gehäuse (10), das eine erste Fläche (10a) umfasst, ein Steuer- und Detektionssystem (13) eines auf die Taste (2) ausgeübten Drucks und mindestens einen Bildschirm (4), der ausgelegt ist, um eine Anzeige von Symbolen (3) anhand jeder Taste (2) über jeweils einen Anzeigeweg (5) zu gestatten, wobei die erste Fläche (10a) des Gehäuses (10) mit einer Öffnung (11) versehen ist, in die jede Taste eingeführt ist, wobei die Taste (2) imstande ist, mit der ersten Fläche (10a) des Gehäuses (10) zusammenzuwirken, wobei das Steuer- und Detektionssystem (13) eine flexible Membran (14) und eine Detektionsvorrichtung (15) eines auf die Taste (2) ausgeübten Drucks aufweist, das sich von der flexiblen Membran (14) unterscheidet, wobei die flexible Membran (14) imstande ist, eine Betätigungskraft und eine Druckrückführwirkung sicherzustellen und mindestens ein Loch (17) aufweist, wobei jedes Loch einen Anzeigeweg (5) für eine Taste (2) begrenzt, wobei jedes Loch (17) von einer Kante (17a) begrenzt ist, die ausgelegt ist, um mit einer Taste (2) zusammenzuwirken, wobei die Detektionsvorrichtung (15) eine Umschaltstruktur aufweist, auf die mindestens ein Fuß (9) wirkt, der mit einer Taste (2) fest verbunden ist, so dass ein Betätigungssignal bereitgestellt wird, wenn auf die Taste (2) ein Druck ausgeübt wird, **dadurch gekennzeichnet, dass** das Peripheriegerät (1) für jede Taste (2) mindestens eine Führungsstruktur (21) der Taste (2) umfasst, die aus einem Fuß (9) zusammengesetzt ist, der mit der Taste (2) fest verbunden ist, und aus zwei Führungen (22), die sich ab der inneren Oberfläche der ersten Fläche (10a) des Gehäuses (10) hervorstehend erstrecken, um zwischen sich eine Gleitschiene für den Fuß (9) gemäß einer Höhe zu begrenzen, die das Führen des Fußes (9) in der Gleitschiene auf dem gesamten Verlagerungsweg erlaubt, der aus einem auf die Taste (2) ausgeübten Druck resultiert.

2. Peripheriegerät (1) nach Anspruch 1, **dadurch gekennzeichnet, dass** es eine Reihe von Tasten (2) aufweist.

3. Peripheriegerät (1) nach Anspruch 1 oder 2, **dadurch gekennzeichnet, dass** jede Taste (2) einen unteren peripheren Bereich (7b) aufweist, der sich auf der Kante (17a) eines Lochs (17) der flexiblen Membran (14) abstützt.

4. Peripheriegerät (1) nach einem der Ansprüche 1 bis 3, **dadurch gekennzeichnet, dass** die flexible Membran (14) eine Schürze (18) aufweist, die sich ab einer Basis (19) erstreckt und an ihrem freien Ende die Kante (17a) jedes Lochs (17) der flexiblen Membran (14) begrenzt.

5. Peripheriegerät (1) nach einem der Ansprüche 1 bis 4, **dadurch gekennzeichnet, dass** die Kante (17a) jedes Lochs (17) der flexiblen Membran (14) ausgelegt ist, um mit dem Boden einer Nut (8) zusammenzuwirken, die auf dem Umfang jeder Taste (2) eingerichtet ist.

6. Peripheriegerät (1) nach einem der vorangehenden Ansprüche, **dadurch gekennzeichnet, dass** die Detektionsvorrichtung (15) eine Stützfläche für die flexible Membran (14) aufweist.

7. Peripheriegerät (1) nach einem der vorangehenden Ansprüche, **dadurch gekennzeichnet, dass** die Detektionsvorrichtung (15) einen Durchgang (16) je Anzeigeweg (5) aufweist, wobei der Anzeigeweg (5) von der Kante (16a) des Durchgangs (16) begrenzt ist.

8. Peripheriegerät (1) nach einem der vorangehenden Ansprüche, **dadurch gekennzeichnet, dass** die flexible Membran (14) ein Durchgangsloch (20) für jeden Fuß (9) aufweist, der mit einer Taste (2) fest verbunden ist.

9. Peripheriegerät (1) nach einem der Ansprüche 1 bis 8, **dadurch gekennzeichnet, dass** es für jede Taste (2) vier Führungsstrukturen (21) aufweist.

10. Peripheriegerät (1) nach Anspruch 9, **dadurch gekennzeichnet, dass** die Führungsstrukturen (21) einer Taste paarweise gemäß zwei schneidenden Achsen ausgerichtet sind.

11. Peripheriegerät (1) nach Anspruch 10, **dadurch gekennzeichnet, dass** die Führungsstrukturen (21) einer Taste (2) mit quadratischem Querschnitt paarweise gemäß zwei senkrechten Achsen ausgerichtet sind.

12. Peripheriegerät (1) nach einem der Ansprüche 1 bis 11, **dadurch gekennzeichnet, dass** der Bildschirm (4) ein bistabiler Bildschirm, vorzugsweise ein elektrophoretischer Bildschirm, ist.

13. Peripheriegerät (1) nach einem der Ansprüche 1 bis 12, **dadurch gekennzeichnet, dass** das Peripheriegerät eine elektronische Steuertastatur ist.

14. Artikel, der ein Peripheriegerät (1) nach einem der Ansprüche 1 bis 13 umfasst.

## Claims

1. A peripheral (**1**) including at least one transparent key (**2**), actuable under the effect of pressure, a case (**10**) comprising a first face (**10a**), a system (**13**) for controlling and detecting a pressure exerted on the key (**2**), and at least one screen (**4**) allowing symbols (**3**) to be displayed through each key (**2**) via respectively a display path (**5**), the first face (**10a**) of the case (**10**) being equipped with an opening (**11**) in which is engaged each key, said key (**2**) cooperating with the first face (**10a**) of the case (**10**), said control and detection system (**13**) including a flexible membrane (**14**) and a detection device (**15**) for detecting a pressure exerted on the key (**2**) separate from the flexible membrane (**14**), said flexible membrane (**14**) ensuring an actuating force and a pressure feedback effect and including at least one orifice (**17**), each orifice delimiting a display path (**5**) for a key (**2**), each orifice (**17**) being delimited by a border (**17a**) cooperating with a key (**2**), the detection device (**15**) including a switching structure on which acts at least one tab (**9**) secured to a key (**2**), so as to provide an actuating signal when a pressure is exerted on said key (**2**), **characterized in that** the peripheral (**1**) comprises, for each key (**2**), at least one guide structure (**21**) of the key (**2**) composed of a tab (**9**) secured to a key (**2**) and two guides (**22**) extending protruding from the inner surface of the first face (**10a**) of the case (**10**), to delimit therebetween a slide for said tab (**9**), at a height allowing to guide said tab (**9**) in the slide throughout the displacement travel resulting from a pressure exerted on said key (**2**).

2. The peripheral (**1**) according to claim 1, **characterized in that** it includes a series of keys (**2**).

3. The peripheral (**1**) according to claim 1 or 2, **characterized in that** each key (**2**) includes a lower peripheral region (**7b**) bearing on the border (**17a**) of an orifice (**17**) of the flexible membrane (**14**).

4. The peripheral (**1**) according to any one of claims 1 to 3, **characterized in that** the flexible membrane (**14**) includes a skirt (**18**) extending from a base plate (**19**) and delimiting at its free end the border (**17a**) of each orifice (**17**) of the flexible membrane (**14**).

5. The peripheral (**1**) according to any one of claims 1 to 4, **characterized in that** the border (**17a**) of each orifice (**17**) of the flexible membrane (**14**) cooperates with the bottom of a groove (**8**) arranged around the periphery of each key (**2**).

6. The peripheral (**1**) according to any one of the preceding claims, **characterized in that** the detection device (**15**) has a bearing surface for the flexible membrane (**14**).

7. The peripheral (**1**) according to any one of the preceding claims, **characterized in that** the detection device (**15**) includes one passage (**16**) per display path (**5**), said display path (**5**) being delimited by a border (**16a**) of said passage (**16**).

8. The peripheral (**1**) according to any one of the preceding claims, **characterized in that** the flexible membrane (**14**) includes a passage hole (**20**) for each tab (**9**) secured to a key (**2**).

9. The peripheral (**1**) according to one of claims 1 to 8, **characterized in that** it includes, for each key (**2**), four guide structures (**21**).

10. The peripheral (**1**) according to claim 9, **characterized in that** the key guide structures (**21**) are aligned in pairs along two intersecting axes.

11. The peripheral (**1**) according to claim 10, **characterized in that** the key guide structures (**21**) of a key (**2**) of square section are aligned in pairs along two perpendicular axes.

12. The peripheral (**1**) according to any one of claims 1 to 11, **characterized in that** the screen (**4**) is a bi-stable screen, preferably an electrophoretic screen.

13. The peripheral (**1**) according to any one of claims 1 to 12, **characterized in that** the peripheral is an electronic control keyboard.

14. An article comprising a peripheral (**1**) according to any one of claims 1 to 13.
